# EUROPÄISCHE PATENTSCHRIFT

(11) **EP 3 251 787 B1**
(45) Veröffentlichungstag und Bekanntmachung des Hinweises auf die Patenterteilung: **14.08.2024**
(21) Anmeldenummer: 17168997.9
(22) Anmeldetag: 02.05.2017
(51) Int. Cl.: B23K 101/00, B23P 15/00, B23K 26/00, B23K 26/342, F04D 29/22

(54) **VERFAHREN ZUR HERSTELLUNG EINES BAUTEILS EINER ROTATIONSMASCHINE SOWIE BAUTEIL HERGESTELLT NACH EINEM SOLCHEN VERFAHREN**
METHOD FOR PRODUCING A COMPONENT OF A ROTARY MACHINE AND COMPONENT PRODUCED ACCORDING TO SUCH A METHOD
PROCÉDÉ DE FABRICATION D'UN COMPOSANT DE MACHINE ROTATIVE ET COMPOSANT FABRIQUÉ SELON UN TEL PROCÉDÉ

(30) Priorität: 31.05.2016 EP 16172289
(43) Veröffentlichungstag der Anmeldung: 06.12.2017
(73) Patentinhaber: Sulzer Management AG, 8401 Winterthur (CH)
(72) Erfinder: Rettberg, Robin, 8400 Winterthur (CH); Kränzler, Thomas, 88682 Salem (DE); Würms, Andreas, 8214 Gächlingen (CH)
(74) Vertreter: IPS Irsch AG

(56) Entgegenhaltungen:
- EP-A1- 2 669 042
- US-A1- 2009 110 556
- US-A1- 2011 318 183
- US-A1- 2015 017 001
- US-A1- 2015 017 013
- US-A1- 2015 196 971
- US-A1- 2015 267 543
- US-A1- 2016 010 469
- KLOCKE FRITZ ET AL: "Turbomachinery component manufacture by application of electrochemical, electro-physical and photonic processes", CIRP ANNALS, vol. 63, no. 2, 2014, pages 703 - 726, XP029041329, ISSN: 0007-8506, DOI: 10.1016/J.CIRP.2014.05.004

## Beschreibung

Die Erfindung betrifft ein Verfahren zur Herstellung eines Bauteils einer Rotationsmaschine gemäss dem Oberbegriff des unabhängigen Patentanspruchs 1 sowie ein Bauteil einer Rotationsmaschine, das nach einem solchen Verfahren hergestellt ist.

Bei der Herstellung von Rotationsmaschinen wie z. B. Pumpen, Turbinen, Kompressoren, Verdichtern oder Expandern ist es bekannt, rotierende Laufräder, Pumpenräder, Impeller, sowie feststehende Diffusoren oder Leiträder als Bauteil aus einem Rohling durch zerspanende bzw. spanabhebende Bearbeitung, beispielsweise durch Fräsen, herauszuarbeiten. Dabei kann der Rohling als Vollmaterial vorliegen oder durch einen urformenden Fertigungssprozess bereits vorbearbeitet sein.

Ein Verfahren gemäß dem Oberbegriff des Anspruchs 1 ist in EP2669042 offenbart.

Ein solches Verfahren ist beispielsweise aus der EP-B-2 012 957 bekannt.

Das dort vorgeschlagene Verfahren zeichnet sich insbesondere dadurch aus, dass es eine zerspanende Herstellung des Bauteils ermöglicht, womit gemeint ist, dass das Bauteil gesamthaft aus dem Rohling mittels einer Zerspanvorrichtung zumindest im Wesentlichen in die gewünschte Endform gebracht wird. Das Zusammenfügen von vorgefertigten Komponenten des Bauteils, beispielsweise mittels Schweissens, ist bei einer solchen integralen Herstellung nicht mehr notwendig. Dies ist insbesondere deshalb vorteilhaft, weil Schweissnähte oder andere Verbindungsstellen an stark belasteten Teilen des Bauteils im Betriebszustand eine Schwachstelle darstellen, die Ursache eines Risses oder einer anderen Schädigung, beispielsweise einer durch Korrosion bedingten, des Bauteils sein kann.

Somit ist insbesondere bei hoch belasteten Bauteilen eine zerspanende Herstellung ohne das Zusammenfügen von einzelnen Komponenten vorteilhaft. Daher werden solche Bauteile wie beispielsweise Laufräder (Impeller) von Pumpen aus massivem Material, je nach Anwendung z.B. aus hochfesten Edelstählen, Superlegierungen, anderen geeigneten Metallen oder Metalllegierungen oder auch aus nicht metallischen Werkstoffen, beispielsweise keramischen, gefertigt und die Schaufeln und Kanäle des Laufrads werden durch spanabhebende Bearbeitung, z.B. durch Fräsen, aus diesem Material herausgearbeitet.

Wie dies auch in der EP-B-2 012 957 bereits dargelegt wird, ist jedoch manchmal aus rein geometrischen Gründen eine gesamthafte zerspanende Herstellung des Bauteils nicht möglich. Dies kann beispielsweise der Fall sein, wenn die Laufräder (Impeller) als gedeckte oder geschlossene Laufräder ausgestaltet sind. Bei einer solchen Ausgestaltung umfasst das Laufrad eine Nabenscheibe, auf welcher die Schaufeln angeordnet sind und ferner eine Deckscheibe, welche die Schaufeln auf Ihrer der Nabenscheibe abgewandten Seite ganz oder zumindest teilweise überdeckt. Somit bilden sich zwischen den Schaufeln zumindest teilweise geschlossene Kanäle aus, die sich jeweils vom Zentrum des Laufrads bis zu seiner äusseren radialen Begrenzungsfläche erstrecken.

Selbst wenn man in Betracht zieht, dass man mit einer Zerspanvorrichtung diese Kanäle von beiden Seiten, also vom Innenraum des Laufrads als auch von seiner radialen Begrenzungsfläche her, aus dem Rohling fräsen bzw. zerspanend bearbeiten kann, so ist klar, dass die Geometrie hier Grenzen setzt und in vielen Fällen eine gesamthafte zerspanende Herstellung unmöglich macht.

In solchen Fällen, in denen es aus rein geometrischen Gründen nicht mehr möglich oder praktikabel ist, das Laufrad insgesamt in einem Stück aus massivem Material zu fräsen, ist es daher Stand der Technik, zunächst aus einem Rohling die Nabenscheibe und die Schaufeln zerspanend herauszuarbeiten. Die Kanäle zwischen den Schaufeln sind dann offene Kanäle, die in einfacher Weise herstellbar sind. Anschliessend wird die Deckscheibe aufgelegt und mit der Nabenscheibe bzw. den Schaufeln gefügt, beispielsweise verschweisst. Die Schweissnähte bzw. die Fügestellen verlaufen dann jeweils dort, wo die Schaufeln mit der Deckscheibe in Kontakt kommen. Dies bringt jedoch den Nachteil mit sich, dass gerade an dieser Stelle im Betriebszustand die Belastungen besonders hoch bzw. kritisch sind. Dieser Grenzbereich zwischen den Schaufeln und der Deckscheibe ist besonders anfällig für Fügefehler, die manchmal bei der Herstellung gar nicht bemerkt werden.

Alternativ ist es auch bekannt, die nicht mehr dem Fräsen zugänglichen Bereiche der Kanäle mit einem Erodierverfahren, beispielsweise Funkenerodieren (EDM: electrical discharge machining), zu fertigen. Diese Verfahren sind aber in der Regel vergleichsweise langsam und kostenintensiv.

Auch ist es Stand der Technik, solche Bauteile mit inneren Kanälen giesstechnisch herzustellen, wobei die inneren Kanäle dann durch eine entsprechende Ausgestaltung der Giessform bzw. der Giesskerne erzeugt werden. Ein Gussbauteil hat aber den Nachteil, dass beim Giessen Defekte beispielsweise in der Gefügestruktur entstehen können, welche die Belastbarkeit oder die Stabilität des Bauteils negativ beeinflussen. Desweiteren sind beim Giessprozess in der Regel die erreichbaren Oberflächengüten sowie die Masshaltigkeiten der nicht mehr dem Fräsen zugänglichen Bereiche limitiert.

In der EP-A-2 669 042 wird deshalb ein Verfahren zur zerspanenden Herstellung eines geschlossenen Laufrads vorgeschlagen, bei welchem das zu fertigende Bauteil (Laufrad) in zwei Subvolumen unterteilt wird, die an einer Trennfläche aneinandergrenzen. Dabei werden die Subvolumen so festgelegt, dass die Trennfläche keine der Begrenzungsflächen der Kanäle umfasst oder schneidet, und dass aus dem ersten Subvolumen, welches später die vollständigen Kanäle umfasst, die Kanäle gesamthaft mittels einem zerspanenden Verfahren, z. B. Fräsen, herausgearbeitet werden können. Das zweite Subvolumen, welches dann lediglich ein Teil der Deckscheibe ist, wird entweder als separate Komponente hergestellt und nach der Fertigstellung der Kanäle mit dem ersten Subvolumen gefügt, oder das zweite Subvolumen wird mittels eines auftragenden Bearbeitungsverfahrens, beispielsweise mittels Auftragschweissens auf dem ersten Subvolumen aufgebaut. Hierdurch soll es einerseits ermöglicht werden, die Kanäle vollständig durch eine zerspanende Herstellung zu fertigen, und andererseits soll es vermieden werden, dass die Trennfläche die Kanäle schneidet oder begrenzt, sodass im Grenzbereich zwischen den Schaufeln und der Deckscheibe keine Fügefehler auftreten können. Aber auch dieses Verfahren unterliegt immer noch geometrisch bedingten Grenzen.

Dieses anhand geschlossener Laufräder erläuterte Problem gibt es aber auch bei anderen Bauteilen, die einen inneren Kanal aufweisen, dessen Lage oder Geometrie derart ist, dass eine gesamthafte zerspanende Herstellung insbesondere aus geometrischen Gründen nicht möglich oder nicht praktikabel ist. Als Beispiele seien hier geschlossene Leiträder, Diffusoren oder auch Kühlkanäle, beispielsweise für Kühlluft, in Turbinenschaufeln genannt.

Ausgehend von diesem Stand der Technik ist es daher eine Aufgabe der Erfindung, ein anderes Verfahren zur Herstellung eines Bauteils einer Rotationsmaschine, das mindestens einen inneren Kanal hat, vorzuschlagen, mit welchem insbesondere auch solche Bauteile herstellbar sind, die aus geometrischen Gründen keine gesamthaft zerspanende Herstellung des Kanals zulassen, wobei das Verfahren eine hohe Zuverlässigkeit des Bauteils im Betriebszustand ermöglichen soll. Ferner soll durch die Erfindung ein entsprechendes Bauteil vorgeschlagen werden.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zur Herstellung eines Bauteils einer Rotationsmaschine vorgeschlagen, welches Bauteil mindestens einen inneren Kanal aufweist, der sich aus einem Zentrum bis an eine Begrenzungsfläche des Bauteils erstreckt, und zumindest teilweise geschlossen ist, wobei ein Rohling bereitgestellt wird, welcher die Begrenzungsfläche sowie eine Deckfläche umfasst, wobei ein erster subtraktiver Bearbeitungsschritt durchgeführt wird, in welchem mittels zerspanender Fertigung ein Teil des Kanals hergestellt wird, welcher zumindest eine Einmündung des Kanals in die Begrenzungsfläche umfasst, sowie eine Ausnehmung in der Deckfläche, und wobei anschliessend der Kanal mittels einer aufbauender Fertigung auf dem Rohling fertiggestellt wird.

Das erfindungsgemässe Verfahren kombiniert somit in vorteilhafter Weise eine subtraktive Bearbeitung, bei welcher Material von dem Rohling entfernt wird, mit einer additiven oder aufbauenden Bearbeitung, bei welcher Material aufgetragen wird. Dabei wird nur ein Teil des Kanals durch eine zerspanende Fertigung hergestellt, während der Rest des Kanals durch eine aufbauende Fertigung generiert wird. Durch diese Kombination ist es möglich, einen Kanal mit -zumindest nahezu - beliebiger Geometrie zu generieren.

Da der Rohling nicht giesstechnisch hergestellt werden muss, kann der Rohling vorteilhafterweise aus einem geschmiedeten Werkstoff bestehen, der dann zerspanend bearbeitet wird. Durch die zerspanende Bearbeitung bleiben alle Vorteile des geschmiedeten Werkstoff erhalten. Dabei wird zumindest die Einmündung des Kanals in die Begrenzungsfläche des Bauteils in dem ersten subtraktiven Bearbeitungsschritt zerspanend hergestellt. Üblicherweise ist bei einem Bauteil einer Rotationsmaschiene, beispielsweise bei einem geschlossenen Laufrad, diese Einmündung bzw. die sie begrenzenden Wandungen, derjenige Bereich, der im Betriebszustand den stärksten Belastungen durch das strömende Fluid ausgesetzt ist. Bei dem Laufrad einer Pumpe umfasst dieser Bereich die Austrittskante der Schaufel, welche den inneren Kanal begrenzt, der von dem Fluid durchströmt wird. Es ist bekannt, dass bei dem Laufrad einer Pumpe an der Austrittskante der Schaufel im Betriebszustand die stärksten mechanischen bzw. hydrodynamischen Belastungen auftreten. Da diese Einmündung des Kanals zerspanend hergestellt wird, bleiben alle vorteilhaften Eigenschaften des geschmiedeten Werkstoffs erhalten, aus welchem der Rohling besteht. Dadurch zeichnet sich der Bereich der Einmündung durch eine besonders hohe mechanische Belastbarkeit und Stabilität auf. Insbesondere kann an der Einmündung auf solche Bearbeitungen wie beispielsweise Schweissen verzichtet werden, die einen hohen Wärmeeintrag in das Material mit sich bringen, welcher die Eigenschaften und die Gefügestruktur negativ beeinflussen könnten.

Zudem wird in dem ersten subtraktiven Bearbeitungsschritt ein Teil des Kanals als Ausnehmung in der Deckfläche des Rohlings zerspanend hergestellt, wobei dieser Teil mit der Einmündung des Kanals in die Begrenzungsfläche verbunden ist. Somit ist nach Beendingung des ersten subtraktiven Bearbeitungsschritts erst ein Teil des Kanals fertiggestellt, der als Ausnehmung in der Deckfläche des Rohlings beginnt und sich bis an die Einmündung in der Begrenzungsfläche erstreckt. Dabei kann der erste subtraktive Bearbeitungsschritt entweder ein Fräsen von der Begrenzungsfläche aus umfassen, oder ein Fräsen von der Deckfläche des Rohlings. Insbesondere ist es natürlich auch möglich, dass der erste subtraktive Bearbeitungsschritt, sowohl ein Fräsen bzw. ein zerspanendes Bearbeiten von der Deckfläche aus als auch ein Fräsen von der Begrenzungsfläche aus umfasst.

Nachdem der erste subtraktive Bearbeitungsschritt beendet ist, wird mittels einer aufbauender Fertigung der Kanal fertiggestellt und das Bauteil in seine endgültige Form gebracht.

Vorzugsweise wird in dem ersten subtraktiven Bearbeitungsschritt die Ausnehmung in der Deckfläche derart gefertigt, dass sie sich bis an das Zentrum erstreckt, wo der Kanal beginnt. Da die Deckfläche des Rohlings für eine Zerspanungsvorrichtung frei zugänglich ist, ist es vorteilhaft, den Kanal bereits in dem ersten subtraktiven Bearbeitungsschritt bis an sein im Zentrum liegendes Ende als Ausnehmung in der Deckfläche zu gestalten. Dies heisst jedoch nicht, dass der Kanal dadurch bereits fertiggestellt wird. Der zentrumsnahe Bereich des Kanals ist dann nämlich nur als Ausnehmung in der Deckfläche und noch nicht als geschlossener bzw. innerer Kanal ausgestaltet. Die Grundfläche des Kanals und gegebenenfalls Teile seiner seitlichen Begrenzungswände werden durch diese zerspanende Bearbeitung generiert, während die Fertigstellung erst im Anschluss durch die aufbauende Fertigung hergestellt werden.

In einer bevorzugten Ausführungsform umfasst das Bauteil eine Mehrzahl von inneren Kanälen, von denen sich jeder aus dem Zentrum bis an die Begrenzungsfläche erstreckt, wobei benachbarte Kanäle jeweils durch eine Trennwand getrennt sind, wobei in dem ersten subtraktiven Bearbeitungsschritt von jedem Kanal jeweils ein Teil des Kanals hergestellt wird, welcher zumindest eine Einmündung des Kanals in die Begrenzungsfläche umfasst, sowie eine Ausnehmung in der Deckfläche, und wobei erst mittels der aufbauenden Fertigung jede Trennwand fertiggestellt wird. Dabei ist es besonders bevorzugt, wenn die Einmündung jedes Kanals in die Begrenzungsfläche im ersten subtraktiven Bearbeitungsschritt so ausgestaltet ist, dass die Einmündung des jeweiligen Kanals bereits geschlossen ausgestaltet ist und von der Deckfläche des Rohlings überdeckt, bzw. geschlossen wird. Die Einmündungen stellen dann jeweils allseitig begrenzte Öffnungen in der Begrenzungsfläche dar.

Vorzugsweise ist der Rohling ein massiver und insbesondere rotationssymmetrischer Körper, d. h. der Rohling weist kein inneren Kavitäten auf. Jedoch kann im Zentrum des Rohlings bevorzugt eine zylindrische axiale und durchgängige Bohrung vorgesehen sein, welche beispielsweise dazu dient, das fertiggestellte Bauteil auf einer Welle, z.B. der Antriebswelle einer Pumpe zu fixieren. D. h. vorzugsweise weist die Deckfläche des Rohlings vor dem ersten subtraktiven Bearbeitungsschritt höchstens eine zentrale Öffnung auf, welche radial innenliegend so angeordnet ist, dass im fertiggestellten Zustand des Bauteils jeder im Zentrum liegende Beginn eines Kanals durch einen Ringkörper von der zentralen Öffung getrennt ist.

Gemäss einer besonders bevorzugten Ausführungsform wird der erste subtraktive Bearbeitungsschritt so durchgeführt, dass nach seiner Beendigung die Deckfläche des Rohlings einen zusammenhängenden, ringförmigen Bereich aufweist, welcher an die Begrenzungsfläche angrenzt, und alle Einmündungen überdeckt, sodass alle Einmündungen bereits als geschlossene Teile der jeweiligen Kanäle ausgestaltet sind. Dies bedeutet, dass in dem ersten subtraktiven Bearbeitungschritt alle Einmündungen der Kanäle und die sie jeweils begrenzenden Wandungen bereits in der Endform des herzustellenden Bauteils hergestellt werden. Dies hat den Vorteil, dass diese Einmündungsbereiche der Kanäle, welche im Betriebszustand den höchsten Beanspruchungen ausgesetzt sind, eine besonders hohe Belastbarkeit und damit auch eine hohe Zuverlässigkeit im Betrieb aufweisen, weil diese Einmündungsbereiche rein zerspanend hergestellt werden und somit im Fertigungsprozess keinem hohen Wärmeeintrag ausgesetzt sind, wie er beispielsweise durch Schweissen, thermisches Spritzen oder andere Verfahren verursacht würde.

Vorzugsweise erfolgt die aufbauende Fertigung schichtweise. Dabei ist es möglich, dassjede Schicht senkrecht zu einer axialen Richtung orientiert ist. Natürlich ist es auch möglich, die Schichten in anderen Ausrichtungen aufzutragen, also derart, dass die jeweilige Flächennormale der Schicht schräg zur axialen Richtung ausgerichtet ist. Das heisst, nach Beendigung des ersten subtraktiven Bearbeitungsschritts, erfolgt der additive Aufbau auf dem Rohling durch sukzessives Aufbringen von Materialschichten, bis das Bauteil fertiggestellt ist. Das Aufbringen von Schichten erfolgt in einer bevorzugten Variante derart, dass die einzelnen Schichten rotationssymmetrisch sind. Dies ist insbesondere auch dann möglich, wenn die Schichten senkrecht zu der axialen Richtung orientiert sind, aber auch bei einem Schichtauftrag, bei welchem die einzelnen Schichten schräg zur axialen Richtung orientiert sind.

Eine weitere bevorzugte Massnahme besteht darin, dass die aufbauende Fertigung mehrere additive Bearbeitungsschritte umfasst, um das Bauteil sukzessive aufzubauen.

Dabei ist es besonders bevorzugt, wenn zwischen den additiven Bearbeitungsschritten mindestens ein weiterer subtraktiver Bearbeitungsschritt durchgeführt wird. In diesem weiteren subtraktiven Bearbeitungsschritt kann dann z. B. durch Fräsen, Schleifen oder Polieren die in dem vorangehenden additiven Bearbeitungsschritt aufgebaute Struktur nachbearbeitet werden. Durch diese Massnahme lässt sich eine Oberflächenoptimierung realisieren oder eine besonders gute Geometrietreue erzielen.

Speziell bevorzugt ist es, dass zwischen zwei additiven Bearbeitungsschritten jeweils ein weiterer subtraktiver Bearbeitungsschritt durchgeführt wird. Das heisst, die additiven Bearbeitungsschritte und die weiteren subtraktiven Bearbeitungsschritte werden wechselweise durchgeführt. Dies ermöglicht eine besonders hohe Präzision und Oberflächengüte des zu fertigenden Bauteils.

Es sind heute Bearbeitungsvorrichtungen bekannt, mit denen sowohl additive Fertigungen, beispielsweise Laserauftragsschweissen, als auch subtraktive Fertigungen, beispielsweise Fräsen oder Schleifen durchführbar sind. Solche Vorrichtungen haben beispielsweise verschiedene Bearbeitungsköpfe, die automatisch wechselbar sind, wobei ein Bearbeitungskopf beispielsweise für Laserauftragsschweissen ausgestaltet ist, während ein anderer Bearbeitungskopf für Fräsen ausgestaltet ist. Gerade solche Bearbeitungsvorrichtungen erlauben einen schnellen und problemlosen Wechsel zwischen subtraktiven und additiven Bearbeitungsverfahren, ohne dass dafür das zu bearbeitende Werkstück umgespannt oder in eine andere Bearbeitungsstation transferiert werden müsste. Dies ermöglicht eine besonders rasche, kostengünstige und hochqualitative Herstellung von Bauteilen, die sehr präzise gefertigt sind.

Eine weitere bevorzugte Massnahme besteht darin, dass nach dem ersten subtraktiven Bearbeitungsschritt das Bauteil komponentenweise aufgebaut wird, wobei vorzugweise zunächst nur jede Trennwand fertiggestellt wird. So werden beispielsweise nach Abschluss des ersten subtraktiven Bearbeitungsschritts zunächst alle Trennwände zwischen den Kanälen komplett aufgebaut und erst anschliessend werden dann die noch fehlenden Teile aufgebaut, z.B. diejenigen, welche die Kanäle zu geschlossenen Kanälen machen.

Aus verfahrenstechnischen Gründen ist es besonders bevorzugt, wenn die aufbauende Fertigung mit Hilfe eines Lasers durchgeführt wird.

Für die Praxis besonders relevante Anwendungen sind es, wenn das Bauteil als Laufrad, als Leitrad oder als Diffusor einer Rotationsmaschine ausgestaltet ist, insbesondere einer Pumpe, einer Turbine, eines Kompressors, eines Verdichters oder eines Expanders.

Durch die Erfindung wird ferner ein Bauteil einer Rotationsmaschine vorgeschlagen, welches nach einem erfindungsgemässen Verfahren hergestellt ist.

Gemäss einer bevorzugten Ausgestaltung ist jede Trennwand als Schaufel ausgestaltet.

Für die Praxis besonders wichtige Ausführungen sind es, wenn das Bauteil ausgestaltet als Laufrad, als Leitrad oder als Diffusor einer Rotationsmaschine, insbesondere einer Pumpe, einer Turbine, eines Kompressors, eines Verdichters oder eines Expanders ausgestaltet ist.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine axiale Schnittdarstellung eines Ausführungsbeispiels eines geschlossenen Laufrads,
- Fig. 2:: eine perspektivische Darstellung eines Ausführungsbeispiels eines Rohlings für die Durchführung eines Ausführungsbeispiels eines erfindungsgemässen Verfahrens,
- Fig. 3:: eine perspektivische Darstellung des Rohlings aus Fig. 1 nach Beendigung des ersten subtraktiven Bearbeitungsschritts,
- Fig. 4:: eine perspektivische Darstellung eines Zwischenzustands während der aufbauenden Fertigung, und
- Fig. 5:: eine perspektivische Darstellung des fertiggestellten Bauteils, welches ausgehend von dem Rohling gemäss Fig. 1 und Fig. 2 hergestellt ist.

Das erfindungsgemässe Verfahren dient zur Herstellung eines Bauteils einer Rotationsmaschine, wobei das Bauteil mindestens einen inneren Kanal aufweist, der sich aus einem Zentrum bis an eine Begrenzungsfläche des Bauteils erstreckt und zumindest teilweise geschlossen ist. Mit einem geschlossenen Kanal ist dabei ein Kanal gemeint, der abgesehen von einem Einlass oder einem Auslass vollständig geschlossen ist, also rohrförmig ausgestaltet ist, das heisst der Kanal ist senkrecht zu seiner Hauptströmungsrichtung überall von einer oder mehreren Wandung(en) begrenzt. Im Unterschied dazu ist mit einem offenen Kanal ein solcher gemeint, der in einer Richtung senkrecht zu seiner Hauptströmungsrichtung, also in einer Richtung senkrecht zu seiner Längserstreckung nicht durch eine Wandung begrenzt, sondern offen ist. So ist beispielsweise ein Kanal mit einer U-förmigen oder V-förmigen Wandung ein offener Kanal. Würde man die offene Seite des U-Profils oder des V-Profils mit einer Decke überdecken, so wäre der Kanal ein geschlossener Kanal.

Mit einem teilweise geschlossenen Kanal ist dann ein solcher gemeint, der teilweise als geschlossener Kanal und teilweise als offener Kanal ausgestaltet ist.

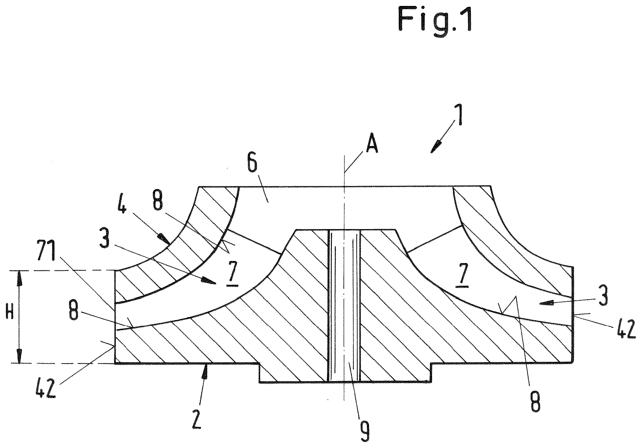

Bei der folgenden Beschreibung der Erfindung wird mit beispielhaftem Charakter auf ein für die Praxis wichtiges Beispiel Bezug genommen, bei welchem das Bauteil ein geschlossenes bzw. gedecktes Laufrad (Impeller) einer Turbomaschine, z. B. einer Pumpe ist. Zum besseren Verständnis zeigt Fig. 1 eine axiale Schnittdarstellung eines Ausführungsbeispiels eines geschlossenen Laufrads, das gesamthaft mit dem Bezugszeichen 1 versehen ist und mittels eines erfindungsgemässen Verfahrens herstellbar ist.

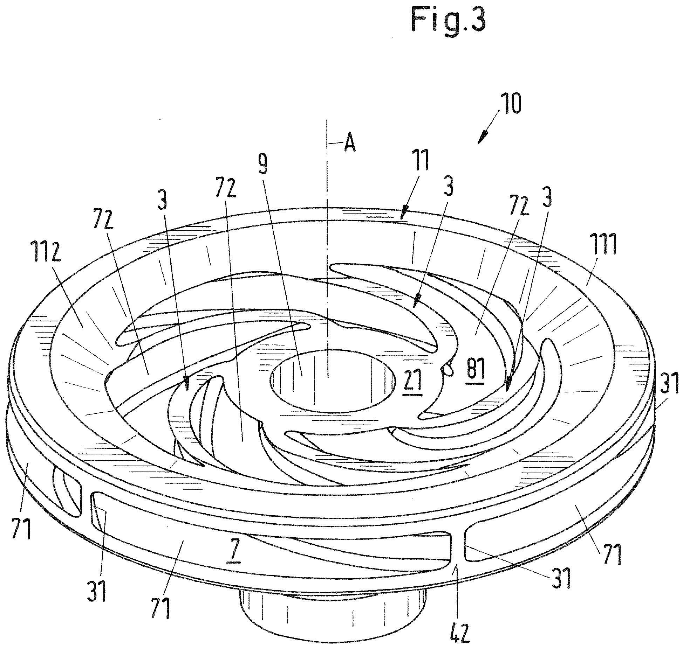

Im Betriebszustand rotiert das Laufrad um eine Drehachse, welche eine axiale Richtung A festlegt. Eine Richtung senkrecht zu dieser axialen Richtung A wird als radiale Richtung bezeichnet. Fig. 1 zeigt das Laufrad 1 in einer Schnittdarstellung entlang der axialen Richtung A. Das Laufrad 1 umfasst in an sich bekannter Weise eine Nabenscheibe 2, mit welcher das Laufrad 1 üblicherweise auf einer nicht dargestellten Achse oder Welle montiert oder befestigt wird, ferner mehrere Schaufeln 3, die auf der Nabenscheibe 2 angeordnet sind, sowie eine Deckscheibe 4, welche die Schaufeln 3 auf ihrer der Nabenscheibe 2 abgewandten Seite bzw. Kante zumindest teilweise überdeckt. Dabei erstreckt sich die Deckscheibe 4 bezüglich der axialen Richtung A darstellungsgemäss (Fig. 1) höher als die Nabenscheibe 2. Dadurch ist darstellungsgemäss oberhalb der Schaufeln 3 ein Innenraum 6 ausgebildet, der bezüglich der radialen Richtung von der Deckscheibe 4 begrenzt wird. Dieser Innenraum 6 stellt im Betriebszustand den Einlass dar, durch welchen ein Fluid das Laufrad 1 anströmt. Zwischen zwei benachbarten Schaufeln 3 existiert jeweils ein innerer Kanal 7, der als zumindest teilweise geschlossener Kanal 7 und hier als geschlossener Kanal 7 ausgestaltet ist, der sich jeweils von einem Zentrum, das durch den Innenraum 6 gebildet wird, bis zu einer Begrenzungsfläche 42 des Laufrads 1 erstreckt. Die Begrenzungsfläche 42 stellt die radial äussere Oberfläche des Impellers 1 dar, welche sich parallel zur axialen Richtung A erstreckt, also die Oberfläche, welche das Laufrad in radialer Richtung begrenzt. Die Begrenzungsfläche 42 umfasst die radial äusseren Oberflächen der Deckscheibe 4 und der Nabenscheibe 2 sowie die radial äusseren Abschlusskanten der Schaufeln 3, die als Austrittskanten 31 (siehe Fig. 3) bezeichnet werden.

Je nach Ausgestaltung des Bauteils ist es natürlich auch möglich, dass die Abschlusskanten der Schaufeln 3 bezüglich der radialen Richtung zurück versetzt sind, also nicht in der Begrenzungsfläche 42 liegen. Die Deckscheibe 4 und/oder die Nabenscheibe 2 ragen dann bezüglich der radialen Richtung über die Schaufeln 3 bzw. über die Abschlusskanten der Schaufeln 3 hinaus. Eine solche Ausgestaltung ist insbesondere auch bei einem Laufrad einer Turbine möglich, bei dem die äusseren Abschlusskanten der Schaufeln 3 üblicherweise die Eintrittskanten darstellen.

Jeder der geschlossenen Kanäle 7 ist somit von einer Begrenzungsfläche 8 umschlossen, die sich jeweils aus den einander zugewandten Oberflächen zweier benachbarter Schaufeln 3, sowie den dazwischenliegenden Oberflächensegmenten der einander zugewandten Oberflächen der Nabenscheibe 2 und der Deckscheibe 4 zusammensetzt. Die Schaufeln 3 bilden also jeweils eine Trennwand zwischen zwei benachbarten inneren Kanälen 7. Jeder Kanal 7 umfasst eine Einmündung 71, mit welcher er in die Begrenzungsfläche 42 einmündet. In Umfangsrichtung benachbarte Einmündungen 71 sind jeweils durch eine Austrittskante 31 voneinander getrennt.

Das Laufrad 1 weist zudem eine zentrale axiale Bohrung 9 auf, welche zur Aufnahme einer Welle oder einer Achse dient, auf welcher das Laufrad 1 montiert werden kann.

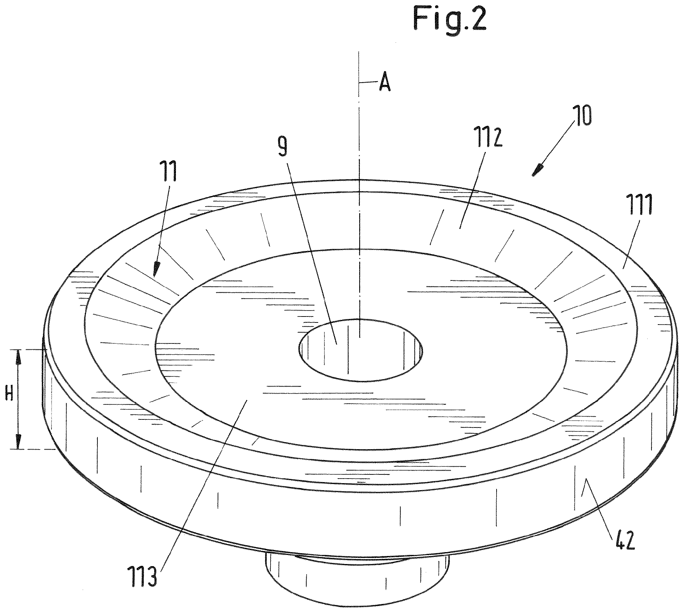

Im Folgenden wird nun anhand der Fig. 2-4 eine Ausführungsform des erfindungsgemässen Verfahrens näher erläutert. Gemäss dem erfindungsgemässen Verfahren wird zunächst ein Rohling bereitgestellt. Fig. 2 zeigt in einer perspektivischen Darstellung ein Ausführungsbeispiel eines solchen Rohlings, der gesamthaft mit dem Bezugszeichen 10 bezeichnet ist. Der Rohling 10 umfasst die Begrenzungsfläche 42 sowie eine Deckfläche 11, welche den Rohling 10 in axialer Richtung A begrenzt.

Besonders bevorzugt besteht der Rohling aus einem geschmiedeten Werkstoff, der ein Metall oder eine Metalllegierung sein kann. So ist beispielsweise Stahl in seinen bekannten Ausführungsformen geeignet oder Aluminium, Titan, Nickel, eine Nickel- oder Cobalt-Basislegierung, oder ein Buntmetall. Natürlich sind auch andere als geschmiedete Werkstoffe möglich, beispielsweise ein Gussmaterial, ein Kunststoff oder ein Verbundmaterial oder ein anderes zerspanbares Material.

Der Rohling 10 ist - abgesehen von der optional schon vorhandenen zentralen axialen Bohrung 9 - als massiver Vollkörper, also insbesondere ohne innere Kavitäten ausgestaltet. Der Rohling 10 wird dabei vorzugsweise so hergestellt oder bearbeitet, dass er bereits einen Teil der Nabenscheibe 2 sowie einen Teil der Deckscheibe 4 umfasst, wobei diese Teile jeweils - abgesehen von den Kanälen - in ihrer gewünschten Endform oder zumindest im Wesentlichen in ihrer Endform ausgestaltet sind. Mit "im Wesentlichen" ist in diesem Zusammenhang gemeint, dass natürlich zu einem späteren Zeitpunkt noch Nachbearbeitungen durchgeführt werden können, wie beispielsweise Polieren, Schleifen oder ähnliches, aber die wesentliche Formgebung ist bei dem Rohling 10 bereits abgeschlossen.

Sinngemäss Gleiches gilt auch für die Begrenzungsfläche 42. Auch diese ist abgesehen von den Einmündungen 71 der Kanäle 7 bereits in Ihrer Endform oder im Wesentlichen in ihrer Endform. Das heisst insbesondere, dass die Erstreckung H der Begrenzungsfläche 42 in axialer Richtung A bereits diejenige ist, die das fertiggestellte Bauteil aufweist. Die Deckfläche 11 kann als ebene Kreisfläche ausgestaltet sein, die senkrecht zur axialen Richtung A orientiert ist, und die optional eine zentrale Öffnung aufweist, welche von der zentralen axialen Bohrung 9 generiert wird.

Bei dem hier beschriebenen Ausführungsbeispiel ist jedoch die Deckfläche 11 nicht als planare Fläche ausgestaltet. Die Deckfläche 11 umfasst einen bezüglich der radialen Richtung aussenliegenden ringförmigen Bereich 111, welcher an die Begrenzungsfläche 42 angrenzt und vorzugsweise senkrecht zur axialen Richtung A orientiert ist. An den ringförmigen Bereich 111 schliesst sich radial innenliegend ein kegelflächenförmiger Bereich 112 an, der eine nach innen gerichtete Verjüngung ausbildet. An den kegelflächenförmigen Bereich 112 schliesst sich radial innenliegend ein kreisförmiger zentraler Ringbereich 113 an, welcher die zentrale axiale Bohrung 9 koaxial umgibt und ebenfalls senkrecht zur axialen Richtung A orientiert ist. Das heisst, der ringförmiger Bereich 111 und der zentrale Ringbereich 113 sind koaxial, wobei der zentrale Ringbereich 113 bezüglich der axialen Richtung A darstellungsgemäss tiefer liegt als der ringförmige Bereich 111 und mit diesem über den kegelflächenförmigen Bereich 112 verbunden ist. Insgesamt weist also der Rohling 10 in seiner Deckfläche 11 eine Vertiefung auf.

Natürlich ist es auch möglich, dass der ringförmige Bereich 111 oder der zentrale Ringbereich 113 nicht senkrecht zur axialen Richtung orientiert sind. Dies kann beispielsweise bei der Fertigung von semiaxialen Laufrädern vorteilhaft sein.

Abgesehen von der zentralen Öffnung ist somit die Deckfläche 11 als zusammenhängende Fläche ausgestaltet, welche keine weiteren Öffnungen aufweist. Der radial aussenliegende ringförmige Bereich 111 bildet vorzugsweise einen Teil der Deckscheibe 4 des fertigen Bauteils 1.

Besonders bevorzugt ist der Rohling 10 - wie auch in Fig. 2 dargestellt - rotationssymmetrisch bezüglich der axialen Richtung A ausgestaltet.

An diesem Rohling 10 wird nun ein erster subtraktiver Bearbeitungsschritt durchgeführt, welcher im Folgenden erläutert wird. Fig. 3 zeigt eine perspektivische Darstellung des Rohlings 10 nach Beendigung des ersten subtraktiven Bearbeitungsschritts. Im Speziellen wird der erste subtraktive Bearbeitungsschritt mittels zerspanender Fertigung durchgeführt.

Mit einem subtraktiven Bearbeitungsschritt ist dabei gemeint, dass in einem solchen Bearbeitungsschritt Material von dem Werkstück - hier dem Rohling 10 - abgetragen bzw. entfernt wird. Mit einer zerspanenden Fertigung ist wie allgemein üblich eine Fertigung gemeint, bei welcher zur Erzielung einer gewünschten geometrischen Form überschüssiges Material in Form von Spänen von dem Rohling 10 bzw. dem Werkstück abgetrennt wird. Zerspanende Fertigungen sind beispielsweise Fräsen, Drehen, Bohren, Hobeln, Feilen, Schleifen, Hohnen oder Läppen, um nur einige Beispiele zu erwähnen.

Der erste subtraktive Bearbeitungsschritt umfasst vorzugsweise ein Fräsen mittels einer Zerspanvorrichtung, die beispielsweise ein computergesteuertes Fräswerkzeug umfasst. Besonders bevorzugt ist die Zerspanvorrichtung mindestens als Fünf-Achsen-Fräsmaschine ausgestaltet, mit welcher die gewünschte geometrische Form aus dem Rohling 10 herausgearbeitet wird. Üblicherweise wird das Fräswerkzeug von einem Manipulator geführt, wobei die Führung computergestützt erfolgt.

In dem ersten subtraktiven Bearbeitungsschritt wird von jedem Kanal 7 ein Teil hergestellt, welcher zumindest die Einmündung 71 des Kanals 7 in die Begrenzungsfläche 42 umfasst, sowie eine Ausnehmung 72 in der Deckfläche 11 des Rohlings. Wie dies Fig. 3 zeigt, ist dabei der Bereich der Einmündung 71 des Kanals 7 als geschlossener Kanalabschnitt ausgestaltet. Die Einmündungen 71 werden jeweils in die Begrenzungsfläche 42 gefräst, wobei benachbarte Einmündungen 71 jeweils durch eine Austrittskante 31 voneinander getrennt sind. Der radial aussenliegende ringförmige Bereich 111 der Deckfläche 11 des Rohlings 10 überdeckt dabei jede der Einmündungen 71 der Kanäle 7, sodass alle Kanäle 7 durch den ringförmigen Bereich 111 geschlossen sind. Das heisst, nach Beendigung des ersten subtraktiven Bearbeitungsschritts (siehe Fig. 3) umfasst die Deckfläche 11 des Rohlings 10 den ringförmigen Bereich 111, welcher an die Begrenzungsfläche 42 angrenzt und als ringförmige zusammenhängende Fläche ausgestaltet ist, die keine Öffnung aufweist, also bezüglich der Umfangsrichtung durchgängig ist, und welche alle Einmündungen 71 der Kanäle 7 überdeckt.

Die Ausnehmungen 72, welche in der Deckfläche 11 des Rohlings hergestellt werden, in dem hier beschriebenen Ausführungsbeispiel also in dem zentralen Ringbereich 113 und in dem kegelflächenförmigen Bereich 112, bilden nach diesem ersten subtraktiven Bearbeitungsschritt noch offene Kanalbereiche der anschliessend erst fertigzustellenden Kanäle 7. Jede Ausnehmung 72 wird so gefräst, dass ihre Grundfläche 81 bereits im Wesentlichen die endgültige Form für den Kanal 7 hat, also insbesondere auch schon den geometrischen Verlauf des jeweiligen Kanals 7 umfasst.

Vorzugsweise wird jede Ausnehmung 72 in dem ersten subtraktiven Bearbeitungsschritt derart gefertigt, dass sie sich bis an das Zentrum, hier den Innenraum 6, erstreckt, wo der Kanal 7 beginnt. Radial innenliegend beginnt jede Ausnehmung 72 beabstandet von der zentralen Öffnung, welche von der zentralen axialen Bohrung 9 generiert wird, d.h. keine der Ausnehmungen 72 ist mit dieser Öffnung verbunden oder mündet in diese. Somit ist jeder im Zentrum - hier der Innenraum 6 - liegende Beginn eines Kanals 7 durch einen Ringkörper 21 von der zentralen Öffnung der Bohrung 9 getrennt. Im fertiggestellten Zustand bildet dieser Ringkörper 21 einen Teil der Nabenscheibe 2.

Die Ausnehmungen 72 sowie die Einmündungen 71 werden in dem ersten Bearbeitungsschritt derart gefräst, dass sie miteinander verbunden sind, d.h jede Ausnehmung 72 geht in den Bereich über, welcher die jeweilige Einmündung 71 des zugehörigen Kanals 7 umfasst.

Nach Beendigung des ersten subtraktiven Bearbeitungsschritts (siehe Fig. 3) weist der Rohling 10 also die folgende Form auf: Von jedem Kanal 7 ist die Einmündung 71 bereits zumindest im Wesentlichen in der Form des fertigen Bauteils 1 in der Begrenzungsfläche 42 ausgestaltet und wird von dem ringförmigen Bereich 111 der Deckfläche 11 des Rohlings 10 überdeckt. Von der jeweiligen Einmündung 71 erstreckt sich der jeweilige Kanal 7 in das Innere des Rohlings 10 und geht in die jeweilige Ausnehmung 72 über, welche darstellungsgemäss (Fig. 3) oben offen ist und die sich bis an den im Zentrum liegenden Beginn des jeweiligen Kanals 7 erstreckt, wobei die Grundfläche 81 jeder Ausnehmung 72 bereits zumindest im Wesentlichen die Ausgestaltung der Grundfläche des fertigen Kanals 7 aufweist. Während die Kanäle 7 also im Bereich ihrer Einmündung 71 bereits in ihrer endgültigen Form sind oder zumindest im Wesentlichen in ihrer endgültigen Form, ist der radial innenliegende Bereich jedes Kanals 7, welcher die nach oben offene Ausnehmung 72 umfasst, noch nicht in seiner endgültigen Form fertiggestellt.

Sinngemäss Gleiches gilt für die Trennwände 3, die später die Schaufeln 3 des Laufrads 1 bilden und jeweils zwei benachbarte Kanäle 7 voneinander trennen. Im Bereich der Begrenzungsfläche 42 hat jede Trennwand 3 bereits ihre endgültige Form oder im Wesentlichen endgültige Form, das heisst insbesondere die Austrittskante 31 jeder Trennwand 3 ist bereits fertiggestellt und liegt zumindest im Wesentlichen in ihrer endgültigen Ausgestaltung vor. Im radial innenliegenden Bereich des Rohlings 10 sind die Trennwände 3 jeweils erst teilweise vorhanden, sie sind also noch nicht fertig, und haben insbesondere bezüglich der axialen Richtung A noch nicht ihre endgültige Höhe erreicht.

Es versteht sich, dass der erste subtraktive Bearbeitungsschritt sowohl ein Fräsen von der Deckfläche 11 aus als auch ein Fräsen von der Begrenzungsfläche 42 aus umfassen kann. Dabei ist es für viele Anwendungen vorteilhaft, wenn die Ausnehmungen 72 von der Deckfläche 11 aus gefräst werden und die Einmündungen 71 von der Begrenzungsfläche 42 aus. Natürlich ist es je nach Bauteil 1 auch möglich, dass im ersten subtraktiven Bearbeitungsschritt nur von der Deckfläche 11 aus oder nur von der Begrenzungsfläche 42 aus gefräst bzw. zerspannend bearbeitet wird.

Ein besonderer Vorteil des hier beschriebenen Ausführungsbeispiels besteht darin, dass nach dem ersten subtraktiven Bearbeitungsschritt insbesondere der Bereich der Einmündungen 71 mit den dazwischenliegenden Austrittskanten 31 und dem die Einmündungen 71 überdeckenden ringförmigen Bereich 111, der Teil der Deckscheibe 4 ist, bereits in seiner endgültigen Form oder zumindest im Wesentlichen in seiner endgültigen Form fertiggestellt ist. Gerade die Austrittskanten 31 und speziell der Grenzbereich zwischen den Austrittskanten 31 und der Deckscheibe 4, sind die kritischen Bereiche, in denen im Betriebszustand die höchsten Belastungen auftreten und wo es am ehesten zu Rissbildungen, Degradationen oder anderen nachteiligen Verschleiss- oder Ermüdungserscheinungen kommt. Da diese kritischen Bereiche bei dem erfindungsgemässen Verfahren mit Hilfe zerspanender Fertigungen hergestellt werden können, lassen sie sich zum einen mit einer extrem hohen Präzision fertigen, und zum anderen kann in diesen kritischen Bereichen vollständig auf solche Fertigungsmethoden verzichtet werden, die einen sehr hohen Wärmeeintrag in das Material mit sich bringen, z. B. Schweissen oder Fügeverfahren, mit denen Komponenten dauerhaft verbunden werden. Diese Methoden mit hohem Wärmeeintrag können nämlich zu Fügefehlern oder unerwünschten Änderungen in der Gefügestruktur führen, die sich negativ auf die Belastbarkeit des Bauteils auswirken.

Ein weiterer Vorteil der rein zerspanenden Fertigung ist es, dass bei einem Rohling 10 aus einem geschmiedeten Werkstoff alle die positiven Eigenschaften des geschmiedeten Werkstoffs erhalten bleiben.

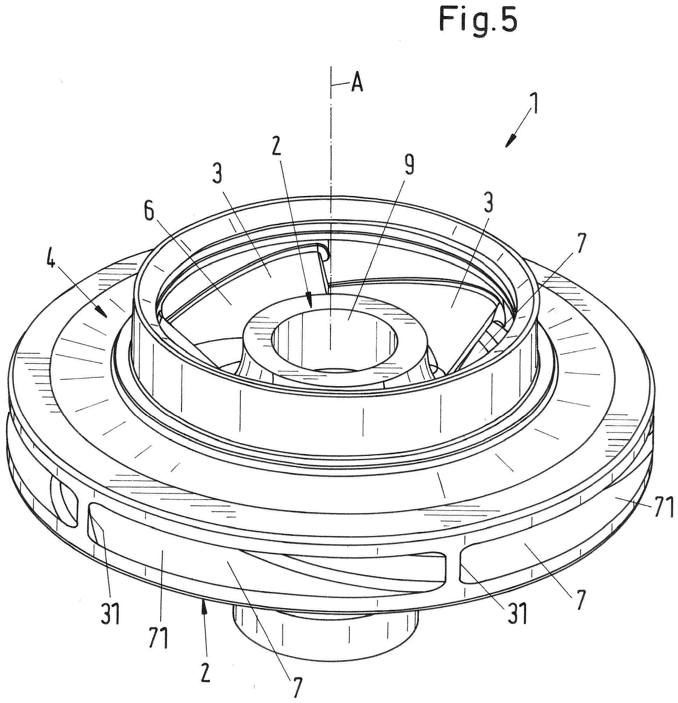

Nachdem der erste subtraktive Bearbeitungsschritt beendet ist (siehe Fig. 3), werden die noch fehlenden Teile des Bauteils 1 mittels einer aufbauenden Fertigung hergestellt und das Bauteil 1 in seine endgültige Form gebracht. Fig. 5 zeigt in einer perspektivischen Darstellung das fertiggestellte Bauteil 1, hier also das gedeckte Laufrad 1.

Die aufbauende Fertigung umfasst einen oder mehrere additive Bearbeitungsschritt(e). Mit einem additiven Bearbeitungsschritt bzw. mit einer additiven Fertigung, die auch als generative Fertigung bezeichnet wird, ist dabei ein Bearbeitungsschritt gemeint, bei welchem Material auf das Werkstück, hier also den Rohling 10, aufgebracht oder aufgetragen wird. Üblicherweise werden bei einer additiven Fertigung aus einem formlosen Material, beispielsweise Flüssigkeiten oder Pulver, oder aus einem formneutralen Material, beispielsweise band- oder drahtförmigem Material, mittels chemischer und/oder physikalischer Prozesse die gewünschten Strukturen generiert, z. B. durch Aufbauen auf einem Werkstück. An sich bekannte additive Fertigungsmethoden für metallische Werkstoffe sind beispielsweise Auftragschweissverfahren, speziell Inert-Gas-Verfahren wie Wolfram-Inert-Gas-Schweissen (WIG) oder Laserauftragschweissen, oder Plasmaverfahren oder selektives Laserschmelzen (SLM Selective Laser Melting).

Nachdem also der erste subtraktive Bearbeitungsschritt beendet ist, werden die noch fehlenden Bereiche des Bauteils 1, insbesondere sind dies Teile der Trennwände 3, Teile der Überdeckung zum Schliessen der Kanäle 7 - also in dem hier beschriebenen Ausführungsbeispiel Teile der Deckscheibe 4, sowie Teile der Nabenscheibe 2 in aufbauender Fertigung generiert.

Beispielsweise wird der noch fehlende Bereich der Trennwände 3 (Schaufeln 3) sowie die fehlende Bereich der Deckscheibe 4 und der Nabenscheibe 2 mittels selektivem Laserschmelzens generiert. Bei diesem an sich bekannten Verfahren wird das zu verarbeitende Material in Pulverform in einer dünnen Schicht auf den Rohling 10 aufgebracht. Das pulverförmige Material wird mittels Laserstrahlung lokal vollständig aufgeschmolzen und bildet nach seiner Erstarrung eine feste Materialschicht. Anschliessend wird der Rohling 10 um den Betrag einer Schichtdicke abgesenkt, und es wird erneut Material in Pulverform aufgetragen, das dann wieder mittels Laserstrahlung lokal aufgeschmolzen wird. Dieser Zyklus wird solange wiederholt, bis das Bauteil 1 fertiggestellt ist. Natürlich ist es möglich, dass abschliessend noch Nachbearbeitungen wie Schleifen, Polieren oder ähnliches erfolgen können.

In einer anderen bevorzugten Ausführungsform werden in der aufbauenden Fertigung die noch fehlenden Teile mittels Laserauftragschweissens generiert. Das Verfahren des Laserauftragsschweissens mit seinen verschiedenen Variante ist dem Fachman hinlänglich bekannt und bedarf deshalb hier keiner Erläuterung.

Dabei ist es möglich, die aufbauende Fertigung schichtweise und insbesondere unter Ausnutzung der rotationssymmetrischen Ausgestaltung des Rohlings 10 durchzuführen.

Eine andere ebenfalls bevorzugte Ausführungsform ist es, bei der aufbauenden Fertigung das Bauteil 1 komponentenweise aufzubauen, d. h. die einzelnen Komponenten des Bauteils 1 wie z.B. die Trennwände 3 oder die Überdeckungen der Kanäle 7 werden in dem Sinne sukzessive aufgebaut, dass zunächst eine Komponente, z. B. die Trennwände, komplett bis zu ihrem Endzustand aufgebaut wird, und anschliessend die nächste Komponente vollständig aufgebaut wird. Dieser Vorgang wird solange wiederholt, bis das Bauteil fertiggestellt ist.

Ferner ist es möglich, dass die einzelnen Komponenten des Bauteils 1 nicht komplett aufgebaut werden, sondern immer nur teilweise, das heist, man baut zunächst einen Teil der Trennwände 3 auf, dann einen Teil der Überdeckungen der Kanäle 7, dann wieder einen Teil der Trennwände 3 usw. Dabei kann vorzugsweise nach einem teilweisen Aufbau ein weiterer subtraktiver Bearbeitungsschritt durchgeführt werden.

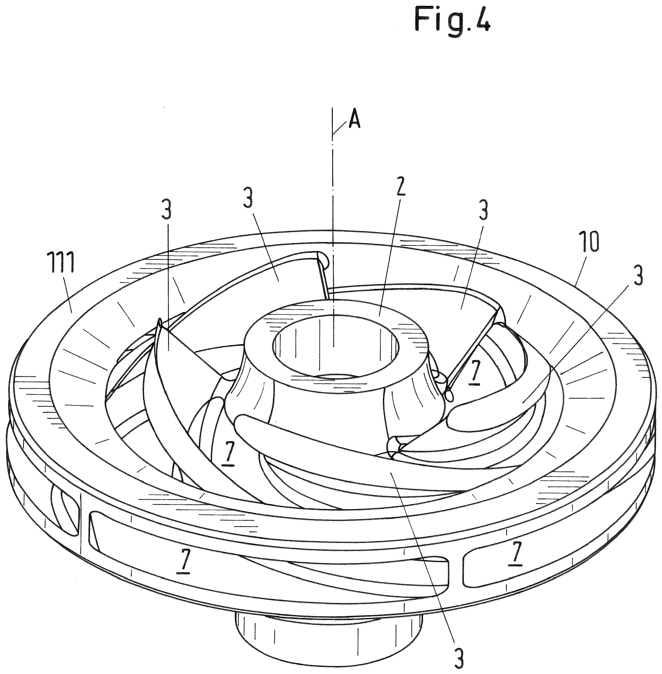

Als Beispiel zeigt Fig. 4 in einer perspektivischen Darstellung einen Zwischenzustand einer solchen aufbauenden Fertigung, bei welchem das Bauteil 1 komponentenweise aufgebaut wird. Bei diesem Beispiel werden nach Beendigung des ersten subtraktiven Bearbeitungsschritts zunächst alle die noch fehlenden Bereiche der Trennwände 3, hier also der Schaufeln 3 des Laufrads 1, aufgebaut. Fig. 4 zeigt das Laufrad 1 in einem Zwischenzustand der aufbauenden Fertigung, in welchem gerade die Schaufeln 3, also die Trennwände 3 zwischen benachbarten Kanälen 7, sowie die Nabenscheibe 2 vollständig, d.h. in ihrer endgültigen Form aufgebaut sind. Anschliessend wird dann mittels der aufbauenden Fertigung der noch fehlende Bereich der Deckscheibe 4 aufgebaut, um so das Laufrad 1 fertigzustellen. Dieses fertiggestellte Laufrad 1 ist in Fig. 5 dargestellt.

Wie bereits erwähnt kann gemäss einer bevorzugten Ausführungsform die aufbauende Fertigung mehrere additive Bearbeitungsschritte umfassen, um das Bauteil 1 sukzessive aufzubauen. Dabei ist es insbesondere bevorzugt, wenn zwischen den additiven Bearbeitungsschritten mindestens ein weiterer subtraktiver Bearbeitungsschritt durchgeführt wird.

In einem solchen weiteren subtraktiven Bearbeitungsschritt können beispielsweise durch zerspanende Fertigung Abweichungen von der gewünschten Geometrie ausgeglichen werden, welche in dem vorgängigen additiven Bearbeitungsschritt entstanden sind. So können in diesem weiteren subtraktiven Bearbeitungsschritt beispielsweise Fräs- oder Schleifarbeiten durchgeführt werden, um solches Material abzutragen, das im additiven Bearbeitungsschritt zu viel aufgetragen wurde, oder um Übergänge zwischen benachbarten Schichten zu egalisieren, zu schleifen oder ähnliches.

Besonders bevorzugt ist es, wenn zwischen zwei additiven Bearbeitungsschritten jeweils ein weiterer subtraktiver Bearbeitungsschritt durchgeführt wird, d.h. die additiven Bearbeitungsschritte und die weiteren subtraktiven Bearbeitungsschritte werden abwechselnd bzw. wechselweise durchgeführt. Hiermit lässt sich eine besonders hohe Güte und Präzision des Bauteils 1 gewährleisten.

Heutzutage sind moderne Bearbeitungsmaschinen bekannt, mit welchen sowohl subtraktive Bearbeitungsschritte als auch additive Bearbeitungsschritte in der gleichen Bearbeitungskammer durchgeführt werden können, ohne dass es dabei notwendig ist, den Rohling 10 bzw. das Bauteil 1 neu einzuspannen oder in eine andere Halterung umzusetzen. Der Rohling 10 wird nur einmal in eine Halterung eingespannt und kann dann wahl- oder wechselweise subtraktiv oder additiv bearbeitet werden. Solche Bearbeitungsmaschinen umfassen dazu mehrere Bearbeitungsköpfe, von denen mindestens einer für eine subtraktive Fertigung ausgestaltet ist, also beispielsweise als Fräswerkzeug, und mindestens einer für die additive Fertigung, also beispielsweise als Vorrichtung zum Laserauftragsschweissen. Nach Beendigung z. B. eines additiven Bearbeitungsschritts wechselt die Bearbeitungsmaschine selbständig den Bearbeitungskopf und kann anschliessend einen subtraktiven Bearbeitungsschritt durchführen und umgekehrt. Hierdurch wird eine besonders schnelle und hoch präzise Herstellung des Bauteils 1 ermöglicht.

Auch wenn die Erfindung anhand der Fertigung eines Laufrads 1 erläutert wurde, so ist die Erfindung natürlich nicht auf solche Bauteile 1 bzw. ihre Herstellung beschränkt, sondern eignet sich für eine Vielzahl anderer Bauteile 1, insbesondere für solche Bauteile 1, bei denen mindestens ein innerer Kanal 7 vorgesehen ist, dessen Geometrie es nicht zulässt, ihn mit vernünftigem Aufwand zerspanend oder subtraktiv aus einem Rohling 10 herauszuarbeiten.

Insbesondere kann das Bauteil 1 auch als Leitrad oder als Diffusor einer Rotationsmaschine ausgestaltet sein, wobei die Rotationsmaschine insbesondere eine Pumpe oder eine Turbine oder ein Kompressor oder ein Verdichter oder ein Expander sein kann.

Der innere Kanal kann beispielsweise auch ein Kühlkanal z.B. in einer Turbinenschaufel sein, beispielsweise ein Kühlluftkanal.

## Patentansprüche

1. Verfahren zur Herstellung eines Bauteils einer Rotationsmaschine, welches mindestens einen inneren Kanal (7) aufweist, der sich aus einem Zentrum (6) bis an eine Begrenzungsfläche (42) des Bauteils erstreckt, und zumindest teilweise geschlossen ist, wobei ein Rohling (10) bereitgestellt wird, welcher die Begrenzungsfläche (42) sowie eine Deckfläche (11) umfasst, dass ein erster subtraktiver Bearbeitungsschritt durchgeführt wird, in welchem mittels zerspanender Fertigung ein Teil des Kanals (7) hergestellt wird, welcher zumindest eine Einmündung (71) des Kanals (7) in die Begrenzungsfläche (42) umfasst, sowie eine Ausnehmung (72) in der Deckfläche (11), und dass anschliessend der Kanal (7) mittels einer aufbauender Fertigung auf dem Rohling (10) fertiggestellt wird, wobei das Bauteil eine Mehrzahl von inneren Kanälen (7) umfasst, von denen sich jeder aus dem Zentrum (6) bis an die Begrenzungsfläche (42) erstreckt, wobei benachbarte Kanäle (7) jeweils durch eine Trennwand (3) getrennt sind, wobei in dem ersten subtraktiven Bearbeitungsschritt von jedem Kanal (7) jeweils ein Teil des Kanals (7) hergestellt wird, welcher zumindest eine Einmündung (71) des Kanals (7) in die Begrenzungsfläche (42) umfasst, sowie eine Ausnehmung (72) in der Deckfläche (11), **dadurch gekennzeichnet, dass** erst mittels der aufbauenden Fertigung jede Trennwand (3) fertiggestellt wird.

2. Verfahren nach Anspruch 1, wobei in dem ersten subtraktiven Bearbeitungsschritt die Ausnehmung (72) in der Deckfläche (11) derart gefertigt wird, dass sie sich bis an das Zentrum (6) erstreckt, wo der Kanal (7) beginnt.

3. Verfahren nach einem der vorangehenden Ansprüche, bei welchem die Deckfläche (11) des Rohlings (10) vor dem ersten subtraktiven Bearbeitungsschritt höchstens eine zentrale Öffnung aufweist, welche radial innenliegend so angeordnet ist, dass im fertiggestellten Zustand des Bauteils jeder im Zentrum (6) liegende Beginn eines Kanals (7) durch einen Ringkörper (21) von der zentralen Öffung getrennt ist.

4. Verfahren nach einem der vorangehenden Ansprüche, wobei der erste subtraktive Bearbeitungsschritt so durchgeführt wird, dass nach seiner Beendigung die Deckfläche (11) des Rohlings (10) einen zusammenhängenden, ringförmigen Bereich (111) aufweist, welcher an die Begrenzungsfläche (42) angrenzt, und alle Einmündungen (71) überdeckt.

5. Verfahren nach einem der vorangehenden Ansprüche, bei welchem die aufbauende Fertigung schichtweise erfolgt.

6. Verfahren nach einem der vorangehenden Ansprüche, wobei die aufbauende Fertigung mehrere additive Bearbeitungsschritte umfasst, um das Bauteil (1) sukzessive aufzubauen.

7. Verfahren nach Anspruch 6, wobei zwischen den additiven Bearbeitungsschritten mindestens ein weiterer subtraktiver Bearbeitungsschritt durchgeführt wird.

8. Verfahren nach Anspruch 6 oder 7, wobei zwischen zwei additiven Bearbeitungsschritten jeweils ein weiterer subtraktiver Bearbeitungsschritt durchgeführt wird.

9. Verfahren nach einem der vorangehenden Ansprüche, bei welchem nach dem ersten subtraktiven Bearbeitungsschritt das Bauteil (1) komponentenweise aufgebaut wird, wobei vorzugweise zunächst nur jede Trennwand (3) fertiggestellt wird.

10. Verfahren nach einem der vorangehenden Ansprüche, bei welchem die aufbauende Fertigung mit Hilfe eines Lasers durchgeführt wird.

11. Verfahren nach einem der vorangehenden Ansprüche, wobei das Bauteil (1) als Laufrad, als Leitrad oder als Diffusor einer Rotationsmaschine ausgestaltet ist, insbesondere einer Pumpe, einer Turbine, eines Kompressors, eines Verdichters oder eines Expanders.

12. Bauteil einer Rotationsmaschine hergestellt nach einem Verfahren gemäss einem der vorangehenden Ansprüche.

13. Bauteil nach Anspruch 12, bei welchem jede Trennwand als Schaufel (3) ausgestaltet ist.

14. Bauteil nach Anspruch 12 oder 13, ausgestaltet als Laufrad, als Leitrad oder als Diffusor einer Rotationsmaschine, insbesondere einer Pumpe, einer Turbine, eines Kompressors, eines Verdichters oder eines Expanders.

## Claims

1. A method of manufacturing a component of a rotary machine that has at least one inner passage (7) that extends from a center (6) up to a boundary surface (42) of the component and is at least partly closed, **characterized in that** a blank (10) is provided that comprises the boundary surface (42) and a top surface (11); **in that** a first subtractive machining step is carried out in which a part of the passage (7) that at least comprises an opening (71) of the passage (7) into the boundary surface (42) as well as a cut-out (72) in the top surface (11) is manufactured by means of machining production; and **in that** subsequently the passage (7) is completed by means of build-up production on the blank (10), wherein the component comprises a plurality of inner passages (7) of which each extends out of the center (6) up to the boundary surface (42); wherein adjacent passages (7) are each separated by a partition wall (3); wherein a respective part of the passage (7) is manufactured in the first subtractive machining step of each passage (7), said part at least comprising an opening (71) of the passage (7) into the boundary surface (42) and a cut-out (72) in the top surface (11); and wherein each partition wall (3) is only completed by means of the build-up production.

2. A method in accordance with claim 1, wherein the cut-out (72) is produced in the top surface (11) in the first subtractive machining step such that it extends to the center (6) where the passage (7) starts.

3. A method in accordance with any one of the preceding claims, in which the top surface (11) of the blank (10) has at most one central opening before the first subtractive machining step that is arranged in a radially inwardly disposed manner such that each start of a passage (7) disposed at the center (6) is separated from the central opening by a ring body (21) in the completed state of the component.

4. A method in accordance with any one of the preceding claims, wherein the first subtractive machining step is carried out such that, after its completion, the top surface (11) of the blank (10) has a contiguous ring-shaped region (111) that is adjacent to the boundary surface (42) and covers all the openings (71).

5. A method in accordance with any one of the preceding claims, in which the build-up production takes place layer-wise.

6. A method in accordance with any one of the preceding claims, wherein the build-up production comprises a plurality of additive machining steps to successively build up the component (1).

7. A method in accordance with claim 6, wherein at least one further subtractive machining step is carried out between the additive machining steps.

8. A method in accordance with claim 6 or claim 7, wherein a respective further subtractive machining step is carried out between two additive machining steps.

9. A method in accordance with any one of the preceding claims, in which the component (1) is built up element by element after the first subtractive machining step, with preferably only each partition wall (3) first being completed.

10. A method in accordance with any one of the preceding claims, in which the build-up production is carried out with the aid of a laser.

11. A method in accordance with any one of the preceding claims, wherein the component (1) is configured as an impeller or as a stator or as a diffuser of a rotary machine, in particular of a pump, of a turbine, of a compressor, of a compactor or of an expander.

12. A component of a rotary machine manufactured in accordance with a method in accordance with any one of the preceding claims.

13. A component in accordance with claim 12, in which each partition wall is configured as a blade (3).

14. A component in accordance with claim 12 or claim 13 configured as an impeller or as a stator or as a diffuser of a rotary machine, in particular of a pump, of a turbine, of a compressor, of a compactor or of an expander.

## Revendications

1. Procédé de fabrication d'un composant d'une machine rotative qui présente au moins un canal intérieur (7) qui s'étend depuis un centre (6) jusqu'à une surface de délimitation (42) du composant et qui est au moins partiellement fermé, une ébauche (10) étant mise à disposition, laquelle comprend la surface de délimitation (42) ainsi qu'une surface de recouvrement (11), une première étape d'usinage soustractif étant réalisée, dans laquelle une partie du canal (7) est fabriquée au moyen d'une fabrication par enlèvement de copeaux, laquelle partie comprend au moins une embouchure (71) du canal (7) dans la surface de délimitation (42) ainsi qu'un creux (72) dans la surface de recouvrement (11), et le canal (7) étant ensuite terminé sur l'ébauche (10) au moyen d'une fabrication par construction, le composant comprenant une pluralité de canaux intérieurs (7) dont chacun s'étend depuis le centre (6) jusqu'à la surface de délimitation (42), des canaux adjacents (7) étant séparés à chaque fois par une paroi de séparation (3), une partie du canal (7) étant fabriquée à chaque fois par chaque canal (7) dans la première étape d'usinage soustractif, laquelle partie comprend au moins une embouchure (71) du canal (7) dans la surface de délimitation (42) ainsi qu'un creux (72) dans la surface de recouvrement (11), **caractérisé en ce que** chaque paroi de séparation (3) n'est terminée qu'au moyen de la fabrication par construction.

2. Procédé selon la revendication 1, dans lequel, dans la première étape d'usinage soustractif, le creux (72) dans la surface de recouvrement (11) est fabriqué de telle sorte qu'il s'étend jusqu'au centre (6) où le canal (7) commence.

3. Procédé selon l'une quelconque des revendications précédentes, dans lequel la surface de recouvrement (11) de l'ébauche (10) présente, avant la première étape d'usinage soustractif, au plus une ouverture centrale qui est disposée radialement à l'intérieur de telle sorte que, dans l'état fini du composant, chaque début d'un canal (7) situé au centre (6) est séparé de l'ouverture centrale par un corps annulaire (21).

4. Procédé selon l'une quelconque des revendications précédentes, dans lequel la première étape d'usinage soustractif est réalisée de telle sorte qu'après sa fin, la surface de recouvrement (11) de l'ébauche (10) présente une région annulaire continue (111) qui est adjacente à la surface de délimitation (42) et recouvre toutes les embouchures (71).

5. Procédé selon l'une quelconque des revendications précédentes, dans lequel la fabrication par construction a lieu couche par couche.

6. Procédé selon l'une quelconque des revendications précédentes, dans lequel la fabrication par construction comprend plusieurs étapes d'usinage additif pour construire successivement le composant (1).

7. Procédé selon la revendication 6, dans lequel au moins une autre étape d'usinage soustractif est réalisée entre les étapes d'usinage additif.

8. Procédé selon la revendication 6 ou 7, dans lequel respectivement une autre étape d'usinage soustractif est réalisée entre deux étapes d'usinage additif.

9. Procédé selon l'une quelconque des revendications précédentes, dans lequel, après la première étape d'usinage soustractif, le composant (1) est construit pièce par pièce, dans lequel de préférence seulement chaque paroi de séparation (3) est d'abord finie.

10. Procédé selon l'une quelconque des revendications précédentes, dans lequel la fabrication par construction est réalisée à l'aide d'un laser.

11. Procédé selon l'une quelconque des revendications précédentes, dans lequel le composant (1) est réalisé sous forme de roue à aubes, de roue directrice ou de diffuseur d'une machine rotative, en particulier d'une pompe, d'une turbine, d'un compresseur, d'un condenseur ou d'un détendeur.

12. Composant d'une machine rotative fabriqué selon un procédé selon l'une quelconque des revendications précédentes.

13. Composant selon la revendication 12, dans lequel chaque paroi de séparation est réalisée sous forme d'aube (3).

14. Composant selon la revendication 12 ou 13, réalisé sous forme de roue à aubes, de roue directrice ou de diffuseur d'une machine rotative, en particulier d'une pompe, d'une turbine, d'un compresseur, d'un condenseur ou d'un détendeur.
